# EUROPEAN PATENT SPECIFICATION

(11) **EP 0 339 990 B1**
(45) Date of publication and mention of the grant of the patent: **03.11.1993**
(21) Application number: 89304196.2
(22) Date of filing: 27.04.1989
(51) Int. Cl.: C08L 23/06, C08L 51/06, C08L 23/20

(54) **Compositions comprising a but-1-ene polymer and a high density polyethylene**
Polyäthylen hoher Dichte und Polybuten-1 enthaltende Zusammensetzungen
Compositions de polyéthylène à densité élevée et de polybutylène-1

(30) Priority: 29.04.1988 US 187791
(43) Date of publication of application: 02.11.1989
(73) Proprietor: SHELL OIL COMPANY, Houston Texas 77002 (US); MITSUI PETROCHEMICAL INDUSTRIES, LTD., Tokyo 100 (JP)
(72) Inventor: Hwo, Charles C., Sugar Land Texas 77478 (US)
(74) Representative: Myerscough, Philip Boyd

(56) References cited:
- GB-A- 2 113 696
- US-A- 3 817 821
- US-A- 4 665 130

## Description

The present invention relates to compositions which can be used to provide a peelable seal.

A peelable seal is defined as the seal or joint between two films or sheets produced by heat sealing or impulse sealing which has the property that it can be opened in the original plane of joining the two film or sheets by the action of a pulling force, without wrenching off or tearing occurring in the material of the two films or sheets used to make up the joint. The seal is achievable either between two films or sheets, or between one film or sheet and a substrate. Depending on which substrate is used, an additional tie layer adhesive may or may not be needed between the film or sheet and the substrate.

For the purposes of the present invention, the peelable seal must possess a mechanical resistance sufficient to maintain the integrity and the tight-seal properties of a packing or wrapping during storage and transport of a packed or wrapped article until such time as the packing or wrapping is opened by the user of the article. The mechanical resistance of the peelable seal must, however, be low enough to permit ready manual opening of the joint, i.e. without the use of any auxiliary instrument.

References in the prior art to thermoplastic materials which have been employed in the manufacture of films capable of forming peelable seals include US-A-4,189,519 which discloses a blend for producing a peelable heat seal comprising (1) about 50 to 90 percent by weight of a copolymer of about 80 to 96 percent by weight ethylene and about 4 to 20 percent by weight of an ethylenically unsaturated ester, and (2) about 10 to 50 percent by weight of a crystalline isotactic polybutylene.

Other references include US-A-3,900,534 which generally discloses thermoplastic shrink films with good heat seal characteristics and good optical properties, but does not address the need for a peel seal film;
US-A-3,817,821 which discloses blends of poly(ethylene/vinyl acetate) (EVA) with polybutylene at 20-40 weight percent; US-A-3,879,492 which discloses blends of polybutylene + styrene-butadiene copolymer + low density polyethylene (LDPE) + high density polyethylene (HDPE) + polyisobutylene; US-A-4,539,263 which discloses peel seals based on blends of propylene copolymers; and US-A-4,665,130 and US-A-4,666,778 which disclose blends of polybutylene + EVA (or polyethylene) + polypropylene with polypropylene being less than 15 weight percent in the blend.

US-A-4,359,544 describes a method for promoting crystallization of various homopolymers and copolymers of but-l-ene wherein the copolymers contain no more than 15 mole% ethylene, which method comprises adding to a composition comprising the but-l-ene homopolymer or copolymer from 0.02 to 5% by weight of stearamide and 0.02 to 5% by weight of high density polyethylene.

US-A-4,440,899 describes a polyolefin composition comprising an intimate mixture of 20 to 99.5% by weight of a first, stabilized, polyolefin powder and from about 0.5% to about 80% by weight of a second, at most slightly stabilized, polyolefin powder. The second powder has a crystalline melt point at least one degree higher than that of the first powder and the second powder has the ability to be oxidized under process conditions. In particular, a polyethylene composition is disclosed throughout the examples which generally has a density of 938 kgm⁻³.

US-A-4,489,034 describes a process using crystalline polymer sheets prepared by the peroxide reaction of a mixture of an alpha-olefin polymer selected from polypropylene and polybutylene with a polyethylene. In particular, this patent claims a product obtained by contacting a mixture of from 95% to 65% by weight of a mixture of from 50% to 96% by weight of crystalline isotactic alpha-olefin polymer selected from polypropylene and polybutylene and 50% to 4% by weight of a polyethylene; 5% to 35% by weight of an impact modifier; and an effective amount of 1,2-polybutadiene cross-linking efficiency improver.

US-A-4,657,982 describes blends and films made from 80% to 99% by weight of a polyethylene, 0.5% to 10% by weight of a polybutene having a number average molecular weight of from 500 to 1500 and 0.5% to 10% by weight of a polybutene having a number average molecular weight of from 1700 to 10,000.

US-A-3,733,373 claims a blend comprising from 70% to 99.9% by weight of a substantially crystallizable polymer of but-l-ene selected from homopolymers of but-l-ene and copolymers of but-l-ene with a polymerizable dissimilar C₂-C₁₂ olefin comonomer, the olefin comonomer being present in the copolymer at a concentration of up to 20% by weight; and from 0.1% to 30% by weight of a polymer of ethylene which is a homopolymer of ethylene or a copolymer of ethylene with a higher alpha-olefin, the higher alpha-olefin being present in the copolymer in a concentration of up to 10% by weight and the ethylene polymer having a density of at least 930 kgm⁻³.

There has long been a need for new compositions, film or sheets and laminar structures suitable for use in providing wrapping or packing materials, which have easy peelability at the seal and yet which will bond to polypropylene without the aid of an adhesive and to other substrates using a tie layer adhesive, and which are retortable at temperature of 121°C (250°F) or above. There has been such a need in the rigid packaging area, such as lid stocks, or in packaging requiring sterilization for sanitation and health purposes.

It has now been found that certain properties, including film retortability at 121°C (250°F) and above, heat seal strength, and peel seal characteristics of wrapping films or sheets may be improved by fabricating films or sheets from blends of homopolymers or copolymers of but-l-ene and a high density polyethylene (either modified or non-modified). Such films or sheets can be bonded to a substrate such as nylon by coextrusion or extrusion lamination. Although reference is made herein predominantly to films, sheets may be formed as well.

Accordingly the present invention provides a composition which comprises (i) from 12% to 15% by weight of a homopolymer or copolymer of but-l-ene having an average molecular weight of at least 100,000 and (ii) from 88% to 85% by weight of a modified or non-modified high density polyethylene having a density of at least 941 kgm⁻³.

The composition of the invention may be formed into a wrappable film which is capable of forming peel seals and the invention therefore also provides a film or sheet of the composition of the invention.

The but-l-ene homopolymer or copolymer suitably contains at least 90%, preferably at least 97% and especially at least 98%, by weight of isotactic polymer. Isotactic but-l-ene homopolymers or copolymers which are suitable for use have a weight average molecular weight of at least 100,000, preferably at least 500,000 and especially 750,000 to 1,750,000 as determined by gel permeation chromatography. Suitable but-l-ene homopolymers and copolymers have a density of 900 to 919, preferably 916 to 919 and especially 917 to 919 kgm⁻³ and a melt index of from 0.1 to 225. But-l-ene polymers having melt indices of 0.40, 2, 4, 20 and 200 are considered particularly suitable. Melt indices are determined in accordance with ASTM D1238 Condition E.

But-l-ene homopolymers and copolymers are suitably obtained by the Ziegler-Natta low pressure polymerization of but-l-ene, e.g. by polymerizing but-l-ene with catalysts of TiC1₃, or TiC1₃/A1C1₃ or A1(C₂H₅)₂C1 at temperatures of from 10° to 50°C, preferably from 20° to 40°C. An example of this process is disclosed in DE-A-1,570,353. The resulting polymer can be further processed in accordance with conventional methods, for example as described in DE-A-1,292,379 or DE-A-1,570,337.

The but-l-ene homopolymer or copolymer may be used together with a small amount of stabilizer, such as "Irganox" 1010 (Registered Trade Mark). Typical commercially available but-l-ene homopolymers or copolymers suitable for use in accordance with the invention include those available from Shell Chemical Company of Houston, Texas, and known as DP 1560, DP 1520 and DP 0110.

The high density polyethylene (HDPE) employed in the composition of the invention has a density of at least 941 kgm⁻³ and preferably at least 950 kgm⁻³. Typically the HDPE has a melt index of from 0.1 to 20 g/10 minutes as measured by ASTM D1238, Condition E. HDPE with higher melt indices may also be used. Since the melt index and molecular weight of the HDPE are inversely related, the corresponding molecular weight for a particular HDPE with a given melt index may be readily determined by routine experimentation. A particularly suitable HDPE has, for example, a melt index of 0.5 g/10 minutes and a density of 950 kgm⁻³. Other preferred HDPE have a density of 941 or 945 kgm⁻³. A high density polyethylene having a viscosity at mixing temperatures which approximates that of the but-l-ene homopolymer or copolymer facilitates mixing of the components. Many suitable HDPE's are commercially available and methods for their preparation are well known in the art. A commercially available HDPE may be prepared by polymerization processes employing Ziegler-type coordination catalysts or supported chromium oxide catalysts. Commercially available HDPE of either type is suitable. DuPont's "Alathon" (Registered Trade Mark) 7815 is a preferred HDPE for use in the compositions of the invention.

The high density polyethylene used in accordance with the invention may be either a modified or non-modified polyethylene. If it is modified it is typically a polyethylene functionalised with 0.1 to 5% by weight of maleic anhydride. Examples of suitable modified high density polyethylenes are "Plexar" 3667 and "Plexar" 201 from USI Chemicals Inc.

If desired, various additives such as mold release agents, conventional fillers, thermo- and ultraviolet stabilizers, processing agent, slip agents, anti-block agents, pigments and/or other additives may be incorporated in the compositions of the invention. The additives may be added before the polymers are blended together, or during the blending process or even after the primary polymers have been blended together. The choice of any particular additive will depend mainly upon the effect desired and upon the end-use contemplated for the composition.

The method of combining the but-l-ene polymer and the high density polyethylene is generally not critical unless it affects the properties of the resultant formulation. Melt compounding or dry tumbling for example can be used to blend the components. For commercial utility, it is desirable to use the least amount of energy to combine the components into an effective blend. Thus, for example, a masterbatch containing the but-l-ene polymer can be added to high density polyethylene using an intensive mixing device such as a twin-screw extruder and incorporating the high density polyethylene into the but-l-ene polymer by passing the polyethylene through an extruder coupled with a side-arm extruder through which the masterbatch is added. An alternative method is to employ an extruder provided with two side-arm extruders, the high density polyethylene and a stabilizer or other additive being injected to the first side-arm and the but-l-ene polymer being injected through the second side-arm extruder. Other intensive mixing devices such as Banbury mixers may be employed to make a masterbatch.

After blending, the composition of the invention may be formed into an oriented e.g. biaxially or unoriented film or sheet by casting a film or sheet (a flat die-melt extrusion process) or using the film blowing method (melt extrusion with a circular die). After fabrication, a film or sheet can be heat sealed to itself or to a substrate such as high density polyethylene or polypropylene by sealing jaws at a preset temperature, pressure and dwell. The seal strength is tested by an Instron tensile tester at 0.423 cm/s (10"/min) crosshead speed. Maximum strength on a 2.54 cm (one inch) width strip was designated as peel seal strength.

The present invention also provides a laminar structure which comprises a substrate to which a film or sheet in accordance with the invention is bonded, for example by extrusion lamination or coextrusion. The substrate preferably comprises a polyamide such as nylon. The laminar structure can be formed by coextrusion, wherein a composition of the invention is coextruded with the substrate. A laminar structure also can be formed through lamination of a film or sheet to a substrate. The laminar structures can be used to provide retortable articles capable of withstanding temperatures over 121°C (250°F). Other substrates besides polyamides may be usable herein, but some substrates may require a tie layer adhesive disposed between the film or sheet and the substrate. The laminar structures may also comprise a second substrate, for example, of high density polyethylene or polypropylene. In one embodiment the laminar structure of the invention comprises a first substrate which is a polyamide and an optional tie layer adhesive which is disposed between the film or sheet and the first substrate and which comprises a modified high density polyethylene.

Melt extrusion with a flat die (casting) may be accomplished for thermoplastic polymers by using a flat die or slot die. The extrusion process starts with a polymer in a form that can be fed continuously into an extruder by means of a screw or pneumatic tube. Sometimes the polymers are combined with additives such as plasticizers, lubricants, stabilizers and colorants by means of Banbury mixers. The resulting mix is extruded through rod shaped dies and chopped into pellets. Pelletized polymer is fed into a screw conveyor into the end of a screw-type extruder and is heated and made into viscous fluid in a cylinder by means of a revolving, helical screw. The material emitting from the die is quenched on a temperature controlled chill roll. Finished materials or sheets may suitably be subjected to either one-way or two-way (biaxial) stretching using continuous tenter-frame operations in biaxial orientation.

The following Examples will help to illustrate the invention.

### EXAMPLE 1

12% by weight of "DURAFLEX" Polybutylene DP1560 having a melt index of about 40 dg/min (ASTM method D-1238 condition "E") and a density of about 908 kgm⁻³ was dry blended in a tumbler mixer with 88% by weight of modified high density polyethylene (USI "Plexar" 3667). The resultant blend was coextruded with polyamide nylon 6, available from Allied Chemical, using a modified HDPE (USI "Plexar" 3607) as a tie layer adhesive using a die temperature of about 220°C into a laminar structure using a flat die. The resulting laminar structure comprised a layer of the blend 13µm (0.5mil) thick, a tie layer 13µm 0.5mil) thick and a polyamide layer 44µm (1.75mil) thick. Peel sample strength was tested. A heat seal was formed by placing layers of the extruded blend of but-1-ene polymer and modified HDPE in face to face contact, using 275.8 k Pa (40 pounds per square inch) of pressure, a dwell time of about 0.5 seconds and different sealing temperatures. After the seal had cooled, 2.54cm (one inch) wide strips were cut from the laminar structure at locations across its width for testing of their seal strengths using an Instron testing device. Physical properties are given in the following Table. A satisfactory seal strength is 1.36 kg/2.54cm (3 lb/inch) or above.

**TABLE**

| Sealing Temperature | | Peel Seal Strength | |
|---|---|---|---|
| (°F) | °C | Kg/2.54cm | (lb/inch) |
| (300) | 149 | 0.31 | (0.69) |
| (325) | 163 | 1.35 | (2.97) |
| (350) | 177 | 1.54 | (3.40) |
| (375) | 191 | 1.47 | (3.24) |
| (400) | 204 | 1.65 | (3.63) |

As may be seen from the Table a blend composition in accordance with the invention has good processability, good retortability, and will bond by coextrusion to a polyamide substrate in a laminar structure and can provide good peel seal strength, particularly at heat seal temperatures above 163°C (325°F).

### EXAMPLE 2

The coextruded laminar structure of Example 1 was tested for autoclavability at 121°C (250°F). Heat seals were formed as described in Example 1 at jaw temperatures of 177 to 204°C (350 to 400°F) with 0.5 second dwell and 275.8 k Pa 40 psi) pressure to form sealed pouches. The sealed pouches were filled with water and placed in an autoclave (pressure cooker) at 121°C (250°F) for at least 30 minutes. At the end of the autoclave cycle, the sealed pouches remained unopen showing the ability of the heat seals to withstand the autoclave conditions without deteriorating.

### EXAMPLE 3

The coextruded laminar structure of Example 1 was also sealed at jaw temperatures of 193 to 232°C (380 to 450°F) to provide water-filled sealed containers. The sealed containers were placed in an autoclave (pressure cooker) at 121°C (250°F) for at least 30 minutes. At the end of the cycle, the sealed containers remained unopened showing the ability of the heat seals to withstand the autoclave conditions.

### EXAMPLE 4

The coextruded laminar structure of Example 1 was heat sealed onto a container made of polypropylene PP5384 from Shell Chemical Company containing water with a cup sealer that had a jaw temperature of 232 to 274°C (450 to 525°F). The laminar structure acted as a lid on the PP container forming a package. The package was placed in an autoclave (pressure cooker) as in Example 3. At the end of the cycle the heat seal was intact and the container remained unopened.

## Claims

1. A composition which comprises (i) from 12% to 15% by weight of a homopolymer or copolymer of but-l-ene having an average molecular weight of at least 100,000 and (ii) from 88% to 85% by weight of a modified or non-modified high density polyethylene having a density of at least 941 kgm⁻³.

2. A composition according to claim 1 wherein said modified high density polyethylene has been functionalized with maleic anhydride.

3. A film or sheet for use in forming retortable peel seals which comprises a composition as claimed in claim 1 and which is optionally biaxially oriented.

4. A laminar structure comprising a first substrate to which a film or sheet as claimed in claim 3 has been bonded by extrusion lamination or coextrusion.

5. A laminar structure according to claim 4, wherein the first substrate is a polyamide and an optional tie layer adhesive is disposed between said film or sheet and said first substrate.

6. A laminar structure according to claim 5 wherein the tie layer adhesive comprises a modified high density polyethylene.

7. A laminar structure according to claim 5 which comprises a second substrate.

8. A laminar structure according to claim 7 wherein the second substrate is of high density polyethylene or polypropylene.

## Patentansprüche

1. Masse, umfassend (i) 12 bis 15 Gew.-% eines Homopolymers oder Copolymers von But-1-en mit einem mittleren Molekulargewicht von mindestens 100.000 und (ii) 88 bis 85 Gew.-% eines modifizierten oder nicht-modifizierten Polyethylens hoher Dichte mit einer Dichte von mindestens 941 kg/m³.

2. Masse nach Anspruch 1, wobei das modifizierte Polyethylen hoher Dichte mit Maleinsäureanhydrid funktionalisiert ist.

3. Film oder Folie zur Verwendung zur Herstellung von (in der Retorte) erhitzbaren abziehbaren Verbindungen, umfassend eine Masse nach Anspruch 1, die gegebenenfalls biaxial orientiert ist.

4. Laminare Struktur, umfassend ein erstes Substrat, auf das ein Film oder eine Folie nach Anspruch 3 gebunden ist durch Extrusionslaminieren oder Coextrudieren.

5. Laminare Struktur nach Anspruch 4, wobei das erste Substrat ein Polyamid ist, und gegebenenfalls eine Klebemittelverbindungsschicht zwischen dem Film bzw. der Folie und dem ersten Substrat angeordnet ist.

6. Laminare Struktur nach Anspruch 5, wobei die Klebemittelverbindungsschicht ein modifiziertes Polyethylen hoher Dichte umfaßt.

7. Laminare Struktur nach Anspruch 5, umfassend ein zweites Substrat.

8. Laminare Struktur nach Anspruch 7, wobei das zweite Substrat aus Polyethylen oder Polypropylen hoher Dichte besteht.

## Revendications

1. Composition comprenant :
(i) de 12 à 15% en poids d'un homopolymère ou copolymère de butylène-1 ayant une masse moléculaire moyenne d'au moins 100.000 ; et
(ii) de 85 à 88% en poids d'un polyéthylène de haute densité modifié ou non ayant une densité d'au moins 941 kg/cm³.

2. Composition selon la revendication 1, dans laquelle le polyéthylène de haute densité est fonctionalisé par l'anhydride maléique.

3. Film ou couche utilisée pour la fabrication de joints détachables stérilisables comprenant une composition selon la revendication 1 et qui est éventuellement orienté biaxialement.

4. Structure stratifiée comprenant un premier substrat auquel est fixé un film ou une couche telle que définie dans la revendication 3 par extrusion-stratification ou co-extrusion.

5. Structure stratifiée selon la revendication 4 selon laquelle le premier substrat est un polyamide et une couche d'adhésif est disposé entre ledit film ou ladite couche et ledit substrat.

6. Structure stratifiée selon la revendication 5, selon laquelle la couche d'adhésif comprend un polyéthylène modifié de haute densité.

7. Structure stratifiée selon la revendication 5 comprenant un deuxième substrat.

8. Structure stratifiée selon la revendication 7 dans laquelle le deuxième substrat est un polyéthylène ou polypropylène de haute densité.
